# EUROPEAN PATENT APPLICATION

(11) **EP 4 001 539 A1**
(43) Date of publication of application: **25.05.2022**
(21) Application number: 20208292.1
(22) Date of filing: 18.11.2020
(51) Int. Cl.: E04B 9/04, E04B 1/86

(54) **AN ACOUSTIC PANEL, A SUSPENDED ACOUSTIC SYSTEM USING SUCH ACOUSTIC PANEL, AND A BASEBOARD**

(71) Applicant: Saint-Gobain Ecophon AB, 260 61 Hyllinge (SE)
(72) Inventor: NILSSON, Thomas, 252 49 Helsingborg (SE); LÖVDAHL, Roger, 261 62 Glumslöv (SE)
(74) Representative: AWA Sweden AB

(57) **Abstract**

An acoustic panel made of a compressed mineral fibre material comprising two major surfaces (2) and at least one side edge connecting the two major surfaces (2) is provided. The panel (1) has an outer boundary portion (5) associated with the at least one side edge and delimiting an inner boundary portion (7). The acoustic panel (1) comprises a first reinforcing structure (8) having a strip-shaped extension across the inner boundary portion (7) from a first position (A) in the outer boundary portion (5) to a second position (B) in the outer boundary portion (5). Further a baseboard (100) is provided.

## Description

### Field of the invention

The present invention relates to an acoustic panel, a suspended acoustic system using such acoustic panels, and a baseboard intended to be cut up into a plurality of acoustical panels.

### Background art

Acoustic panels comprising compressed fibre material, such as glass or stone wool, may be arranged in a room or in another accommodation and may serve a variety of purposes. The panels are used for improving the acoustical characteristics of the room and may also be used for concealing wiring, piping, as well as devices related to heating, ventilation, and air condition.

The panels may form part of a panel system and may constitute horizontally arranged ceiling tiles, vertically arranged baffle elements, wall mounted elements or free-standing screens.

The side edges of the panels may be provided with groove arrangements enabling mounting, for instance in a grid of profiles.

The panels are typically made from large baseboards which are cut or by other means split up into panels of suitable size. Subsequently, the panels may be provided with groove arrangements along the side edges, for instance by a milling operation.

When designing a panel made of compressed fibre material, there are conflicting interests when choosing the density of the panel and thus also of choosing the density of the baseboard from which the panel is to be made.

On the one hand, a low-density panel may be preferable since it enhances absorption of lower sound frequencies. Also, a low-density panel will have a reduced weight which facilitates transport and handling. Further, the material cost will be lower since the amount of fibre material in each panel will be reduced.

On the other hand, a high density is preferable since it provides a more robust panel. The side edges of the panel may, as mentioned above, be provided with a groove arrangement for mounting, and a panel having a higher density facilitates the provision of the groove arrangement, and also ensures that the groove arrangement exhibits the required strength for enabling mounting. Further, a higher density may also make the panel less sensitive to damages during transport and handling, and may also prevent problems associated with sagging of the panel.

Thus, the chosen density for the acoustical panel will in most cases be a compromise between the conflicting interests presented above.

There is hence a need for a low-density acoustic panel which still may present the advantages of a high-density panel in terms of robustness to thereby allow provision of the groove arrangement and which also may resist sagging.

### Summary of the invention

In view of that stated above, the object of the present invention is to provide a robust acoustical panel made of compressed fibre material and having a low density which is robust enough to be suspended in a substantially horizontal direction without sagging.

Another object is to provide a low-density acoustical panel which is robust enough to allow a groove arrangement along its side edges.

It is also an object to provide a baseboard from which such acoustical panels may be manufactured.

These and other objects are solved by an acoustic panel made of a compressed mineral fibre material comprising two major surfaces and at least one side edge connecting the two major surfaces,
wherein the panel has an outer boundary portion associated with the at least one side edge and delimiting an inner boundary portion,
wherein the acoustic panel comprises a first reinforcing structure having a strip-shaped extension across the inner boundary portion from a first position in the outer boundary portion to a second position in the outer boundary portion.

In the context of the invention the term *"outer boundary*" is to be understood as a zone of the acoustic panel having a three-dimensional extension and extending along at least a portion of the perimeter of the acoustic panel while delimiting a central portion of the panel. The outer boundary must not have a continuous extension as seen along the perimeter of the acoustic panel. It is sufficient that it is associated with at least one side edge of the acoustic panel. This may be the case in the event the acoustic panel has a rounded shape, such as being circular or oval. It is preferred that it is associated with at least two side edge portions. Further, the outer boundary must not extend across the full thickness of the acoustic panel.

In the context of the invention the term *"inner boundary'* is to be understood as a zone of the acoustic panel delimited by the outer boundary. The inner boundary has a three-dimensional extension.

The acoustic panel may have a rounded shape as seen across its major surface, i.e. being circular or oval. Alternatively, the acoustic panel may have a polygonal shape as seen across its major surface. Thus, in the event of a polygonal shape, the shape may have three or more side edges, such as being triangular, quadrangular, pentagonal, hexagonal etc.

By the present invention, an acoustic panel is provided which comprises a reinforcing structure which has an extension starting from a first position in the outer boundary portion, across the inner boundary portion and ending in a second portion of the outer boundary portion. The first and second portions are separate from each other. Thereby the acoustic panel is provided with an improved rigidity which prevents/reduces sagging of the panel when used in a mounted position. Accordingly, by the first reinforcing structure, the acoustic panel may be made of a low-density material while still being robust.

By the strip-shaped configuration, one or more reinforcing structures may be arranged in any suitable pattern across the cross-sectional area and also with varying thicknesses depending on the design of the individual acoustic panel and its properties. The first reinforcing structure may further, within the scope of the invention, be arranged in any position as seen in the thickness direction of the acoustic panel. Thus, it may be arranged on one or both of the major surfaces, i.e. the exterior surfaces, or have an extension into the body as seen in the thickness direction. It may even be arranged as a layer in the body of the acoustic panel in the event of a laminate structure.

The reinforcing structure may be arranged either as a structural rigid unit in the form of a lath, a tape or as a coating. The structural rigidity may be provided for after application, e.g. by activation. No matter form, it is preferred that the first reinforcing structure has a continuous extension.

Sagging is typically caused by gravity. The skilled person is well aware of that a panel's tendency towards sagging depends on physical parameters and environmental parameters. Non-limiting examples of physical parameters are the type of material, density, thickness, cross-sectional area and geometry of the perimeter. A non-limiting example of an environmental parameter is humidity in the area of its intended mounting. The present invention allows an economy in tailor-making individual acoustic panels to meet specific installation requirements/installation patterns depending on such physical and/or environmental parameters.

In the event of the acoustic panel comprising more than one first reinforcing structure, such plurality of structures may at least partially overlap each other. One such embodiment is in the event the structures are arranged in a net-like pattern. another embodiment is in the event the first reinforcing structure as such being formed by different uni-directional layers.

The first reinforcing structure may be applied on at least one of the two major surfaces. The first reinforcing structure may be arranged on one or both major surfaces. In the event the panel is intended to be mounted in the ceiling or along a wall, the first reinforcing structure may be applied on the major surface which is configured to face the room.

The acoustic panel may comprise a laminated structure and the first reinforcing structure may be applied between two layers of the laminated structure.

The first reinforcing structure may be a coating applied in liquid form as a strip having a continuous extension. The coating may by way of example be applied by extrusion, printing, painting, spraying or 3D printing.

Alternatively, the first reinforcing structure may be a structural rigid unit in the form of a lath or a tape having a continuous extension. The lath may by way of example be an extruded piece of plastic or metal material.

The coating may be activated after application by using UV light or heat. This may also be used to activate any binding material or adhesive. In the event of UV light, this may be provided by a fluorescent lamp or by a UV-LED. In the event of a UV-LED, the typical wave length may be 385nm, 395nm or 405nm depending on the type of material to be activated, i.e. cured.

The acoustic panel may further comprise a second reinforcing structure having a strip-shaped extension along the at least one side edge of the panel and in the outer boundary portion.

The thus reinforced at least one side edge portion may be provided with groove arrangements along associated side edge portion even if the panel as such comprises compressed mineral fibre material of a relatively low density. A light weight acoustic panel made of compressed mineral fibre material and having enhanced properties for absorption of lower sound frequencies may thus be obtained, while the panel simultaneous may exhibit improved robustness enabling provision of groove arrangements and making the panel less sensitive to damages during transportation and handling.

The second reinforcing structure may extend along all side edge portions of the acoustic panel. Alternatively, the second reinforcing structure may extend along two opposing side edge portions of the acoustic panel.

The second reinforcing structure may have a continuous extension.

The second reinforcing structure and/or the first reinforcing structure may be a reinforcing agent which is introduced into the acoustic panel in liquid form by diffusing, pressing, blowing, sucking or injecting and then activated. A panel made of compressed mineral fibre material has a porous structure, and that porosity may be utilized for introducing the reinforcement agent in liquid form into the panel. Alternatively, the reinforcement agent may be in pulverulent form and be introduced into the panel by vibrating the reinforcement agent into the panel. The porosity of the panel may be utilized for introducing the pulverulent reinforcement agent into the panel.

It is to be understood that the penetration depth of the reinforcing agent may differ depending on whether it is a first reinforcing structure or a second reinforcing structure to be formed. It is also to be understood that the penetration depth may differ along the longitudinal extension of an individual reinforcing structure. Also, in the event the acoustic panel comprises more than one reinforcing structure of the same type, e.g. two or more first reinforcing structures, these may have different penetration depths.

The reinforcement agent may be selected from the group consisting of lignosulphonate, silicates, such as sodium silicates, polyesters, melamine, urea formaldehyde, polyamides, furane-based resins, and phenolic resin-based binders.

The reinforcing agent may be activated by drying, curing or heating. The choice of activation is applicable no matter if the reinforcing agent is applied in liquid or pulverulent form.

The reinforcement agent may be introduced such that the second reinforcing structure and/or the first reinforcing structure formed after activation of the reinforcement agent exhibits an extension E in a thickness direction of the acoustic panel which is smaller than the thickness T of the acoustic panel.

The first reinforcing structure may at least partially overlap the second reinforcing structure in the first and second positions in the outer boundary portion.

The overlap may be a physical overlap with the two types of reinforcing structures physically contacting each other as seen in the thickness direction of the acoustic panel. Alternatively, the overlap may be non-physical by two types of reinforcing structures being arranged in different layers as seen in the thickness direction of the acoustic panel.

The compressed mineral fibre material may be a glass wool having a density ranging within 10-80 kg/m3, or wherein the compressed mineral fibre material is a stone wool having a density ranging within 30-150 kg/m3. These ranges of density are qualified in the art as low-density compressed mineral fibre materials.

According to another aspect, a baseboard intended to be cut up into a plurality of acoustic panels is provided. The baseboard comprises a body made of compressed mineral fibre material and a reinforcing grid, wherein
the side edge portion of each acoustic panel to be cut comprises an outer boundary portion delimiting an inner boundary portion; and wherein
the reinforcing grid, for each acoustic panel to be cut, comprises
a first reinforcing structure having a strip-shaped extension across the inner boundary portion from a first position in the outer boundary portion to a second position in the outer boundary portion, and
a second reinforcing structure having a strip-shaped extension along the side edge portion of the acoustic panel to be cut and in the outer boundary portion.

The features and advantages previously discussed in view of the acoustic panel are equally applicable to the baseboard as such. In order of avoiding undue repetition, reference is made to the discussion above relating to the acoustic panel.

It is to be understood that one and the same baseboard may be configured to be cut into a plurality of acoustic panels which have different designs of their reinforcing structures. Thus, the reinforcing grid of the baseboard must not be strictly symmetrical. It is also to be understood that different sub-portions of the reinforcing grid may be formed by different application methods. Further, it is to be understood that different sub-portions of the reinforcing grid may be formed with different penetration depths. Thus, in a non-limiting example, the first reinforcing structure may be arranged to have a substantially two-dimensional extension across one or both of the two major surfaces of the acoustic panel, whereas the second reinforcing structure may be arranged to have a three-dimensional extension as seen in the thickness direction. Further, the second reinforcing structure, may have a circumferential extension along the side edge portion of the acoustic panel to be cut.

According to yet another aspect, a suspended acoustic system is provided which comprises an acoustic panel according to any of claims 1-11. The acoustic system may be configured to be mounted in the ceiling or be mounted on the wall. Advantages and features previously discussed in the light of the acoustic panel as such are equally applicable to the suspended acoustic system.

The suspended ceiling system may further comprise a grid of profiles supporting the acoustic panel.

The grid of profiles may comprise supporting flanges configured to engage with the outer boundary portion of the acoustic panel. The engagement may be made by the supporting flanges engaging one or more recesses formed in or adjacent the at least one side edge portion of the panel, or by the acoustic panel resting on-top of the supporting flanges.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a perspective view of an acoustic panel according to one embodiment of the invention is disclosed.
Figs. 2A-2F discloses different embodiments of patterns of the first reinforcing structure.
Figs. 3A and 3B disclose the interaction between the first and second reinforcing structure as seen in the outer boundary portion.
Fig. 4 discloses a first embodiment of a baseboard intended to be cut up into a plurality of acoustic panels.
Fig. 5 discloses a second embodiment of a baseboard intended to be cut up into a plurality of acoustic panels.
Figs 6A-6F are schematic side views illustrating embodiments of a step in a method for manufacturing acoustical panels.
Fig. 7 discloses a cross section view of a side edge portion of an acoustical panel.
Fig. 8 discloses a process for obtaining a baseboard with reinforcing structure.
Fig. 9 illustrates a first embodiment with a side edge portion of an acoustic panel having a second reinforcing structure provided with a groove arrangement.
Fig. 10 illustrates a second embodiment with a side edge portion of an acoustic panel having a second reinforcing structure provided with a groove arrangement.
Fig. 11 illustrates, highly, schematically, one embodiment of a suspended acoustic system.
Fig. 12 illustrates, highly, schematically, another embodiment of a suspended acoustic system.

### Description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

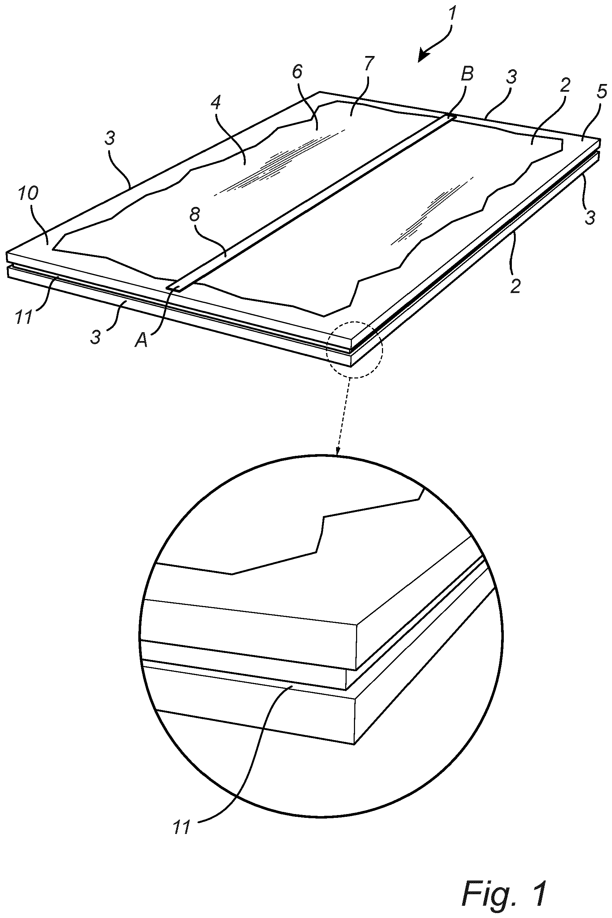

Starting with Fig. 1, one embodiment of an acoustic panel 1 according to one embodiment of the invention is disclosed. The acoustic panel 1 has a quadrangular shape and comprises two major surfaces 2 and four side edges 3 connecting the two major surfaces 2.

The acoustic panel 1 comprises a body 4 made of a compressed fibre material, for instance mineral wool such as glass wool or stone wool. As a consequence, the acoustic panel 1 has a porous structure. The acoustic panel 1 having a body 4 made of glass wool may have a density in the range of 10-80 kg/m³ and have a binder content in the range of 6-10%. An acoustic panel 1 having a body 4 made of stone wool may have a density in the range of 30-150 kg/m³ and have a binder content in the range of 2-6%.

The acoustic panel 1 comprises an outer boundary portion 5 which is associated with the at least one side edge 3. The outer boundary portion 5 delimits a central portion 6 of the panel 1 which forms an inner boundary portion 7. The outer and inner boundary portions 5, 7 should be seen as virtual geometrical zones rather than physical zones.

The outer boundary portion 5 has a three-dimensional extension and extends in the disclosed embodiment along the full circumference of the acoustic panel 1.

The acoustic panel 1 comprises a first reinforcing structure 8 having a strip-shaped extension across the inner boundary portion 7 from a first position A in the outer boundary portion 5 to a second position B in the outer boundary portion 5. The first reinforcing structure 8 is disclosed as being arranged across one of the two opposing major surfaces 2 of the panel 1. It is to be understood that the first reinforcing structure 8 alternatively may be arranged across both of the opposing major surfaces 2 of the panel 1

The first reinforcing structure 8 may be arranged as a structural rigid unit in the form of a lath, a tape or as a coating. The lath may by way of example be an extruded piece of plastic or metal material. In the event of a coating, the structural rigidity thereof may be provided for after application, e.g. by activation. No matter form, it is preferred that the first reinforcing structure 8 has a continuous extension.

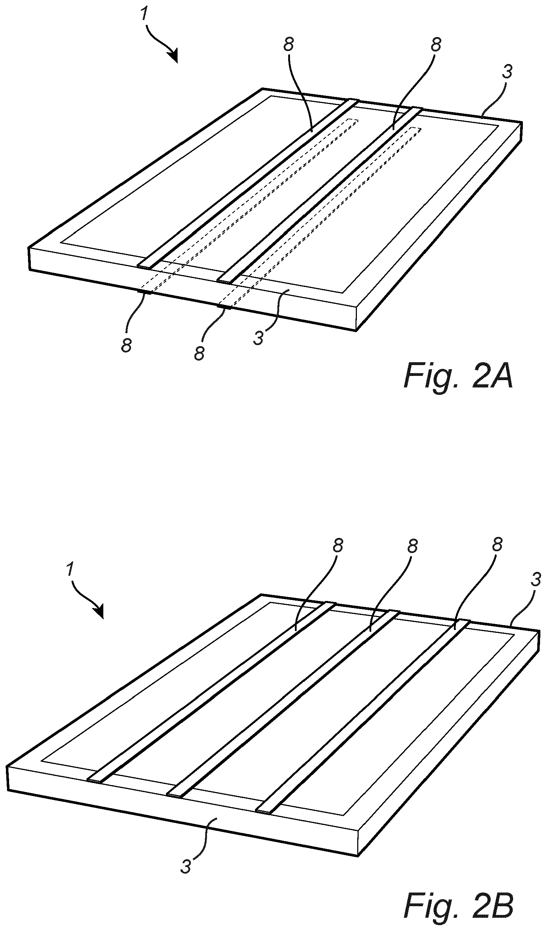

In the disclosed embodiment, one single strip is arranged across the major surface 2. Depending on the required robustness of the acoustic panel 1, two or more reinforcing structures 8 of the first type may be arranged. These may be arranged in a number of possible patterns. Figs 2A-2E disclose some non-limiting examples of different patterns of the first reinforcing structure 8. It is to be understood that in the event the acoustic panel 1 is intended to be mounted in the ceiling or along a wall, the first reinforcing structure 8 may be applied on the major surface 2 which is configured to face the room.

Fig. 2A discloses a first embodiment where the first reinforcing structure 8 comprises two strips that arranged in parallel between two opposing side edges 3 of the acoustic panel 1. The strips are arranged close to the middle area of the panel 1 and on both major surfaces of the panel 1.

Fig. 2B discloses a second embodiment where the first reinforcing structure 8 comprises three strips arranged in parallel between two opposing side edges 3 of the panel 1. The three strips are arranged equidistantly across one of the two opposing major surfaces 2 of the panel 1.

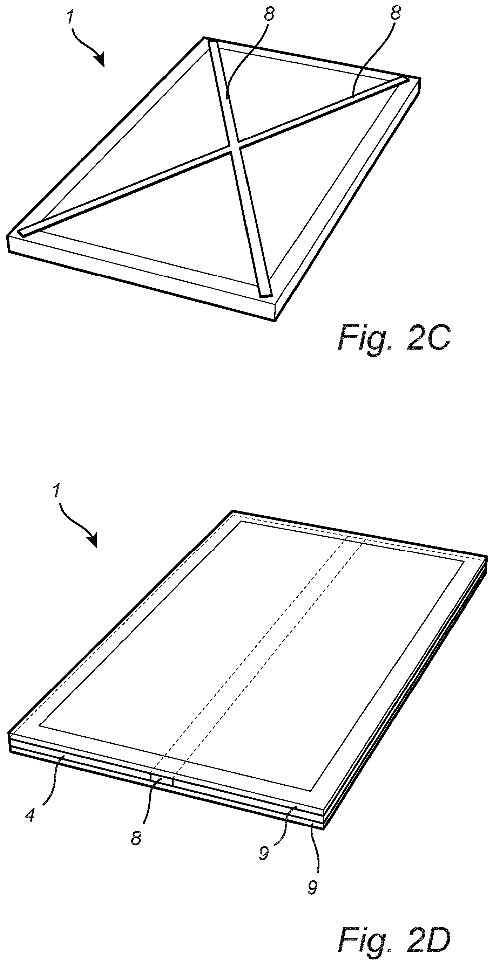

Fig. 2C discloses a third embodiment where the first reinforcing structure 8 comprises two strips which are arranged as a cross which extends between the four corners of the panel 1. This is an example of an embodiment comprising a plurality of first reinforcing structures 8 which at least partially overlap each other.

Fig. 2D discloses a fourth embodiment illustrating that the first reinforcing structure 8 also may be arranged at different positions as seen across the thickness direction of the acoustic panel 1. It may be arranged in level with the exterior surface of the acoustic panel 1 as is disclosed in Figs 2A-2C. It may also be arranged inside the body 4 of the acoustic panel 1 as seen in the thickness direction thereof. In the event the body 4 of the acoustic panel 1 is a laminated structure comprising two or more layers 9, the first reinforcing structure 8 may be arranged between two such layers 9.

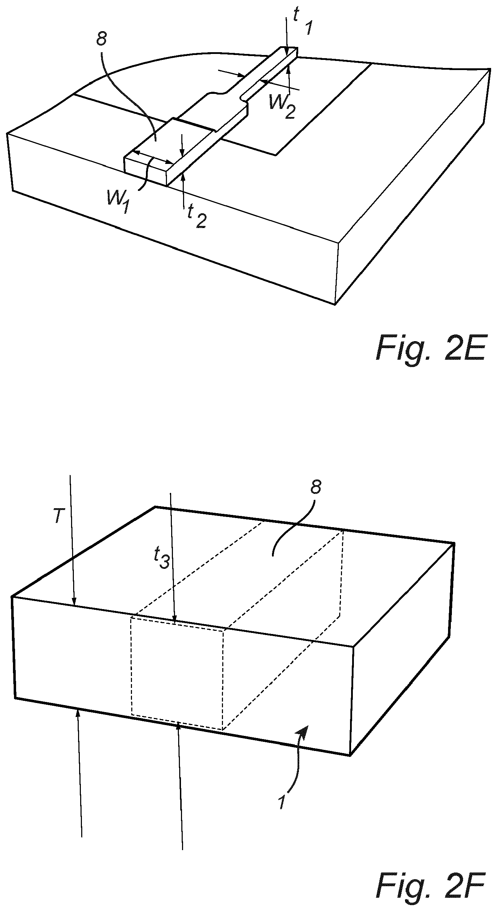

Fig. 2E discloses, highly schematically one embodiment wherein the first reinforcing structure 8 has a continuous extension but a varying thickness t1; t2 along its longitudinal extension. It is to be understood that also the width w1; w2 of the first reinforcing structure 8 may vary along the longitudinal extension.

No matter the pattern of the first reinforcing structure 8, this may be formed as a coating which is applied in liquid form as a strip having a continuous extension. Depending on the viscosity of the coating, the coating may be applied as a bead. The coating may by way of example be applied by extrusion, printing, painting, spraying or 3D printing. Depending on the formula of the coating, the coating may require an activation, i.e. curing, to receive its structural rigidity. The first reinforcing structure 8 may be arranged to have a thickness t3 that corresponds to the thickness T of the acoustic panel 1, see Fig. 2F.

The activation may be provided for by subjecting the applied coating to UV light or heat to thereby activate the same. In the event of UV light, this may be provided by a fluorescent lamp or by a UV-LED. In the event of a UV-LED, the typical wave length may be 385nm, 395nm or 405nm depending on the type of material to be activated. In the event of heat, this may be made by IR or by oven. The UV light or heat may also be used to activate ant binder or adhesive used.

Alternatively, the first reinforcing structure 8 may be a structural rigid unit in the form of a lath or a tape having a continuous extension. The lath may by way of example be an extruded piece of plastic or metal material. The lath or tape may be configured as a laminate. Further, the lath or tape must not have a uniform with or thickness but may be provided with non-disclosed cut-outs to reduce weight.

Now turning to Fig. 1 anew, the acoustic panel 1 further comprises a second reinforcing structure 10. The second reinforcing structure 10 is arranged in the outer boundary portion 5. The second reinforcing structure 10 is disclosed as having a strip-shaped extension along the perimeter of the acoustic panel 1. The second reinforcing structure 10 is disclosed as having a continuous extension. It may also, with remained function have discontinuous extension.

The second reinforcing structure 10 may extend along all side edge portions of the acoustic panel 1. Alternatively, the second reinforcing structure 10 may extend along two opposing side edge portions of the acoustic panel 1.

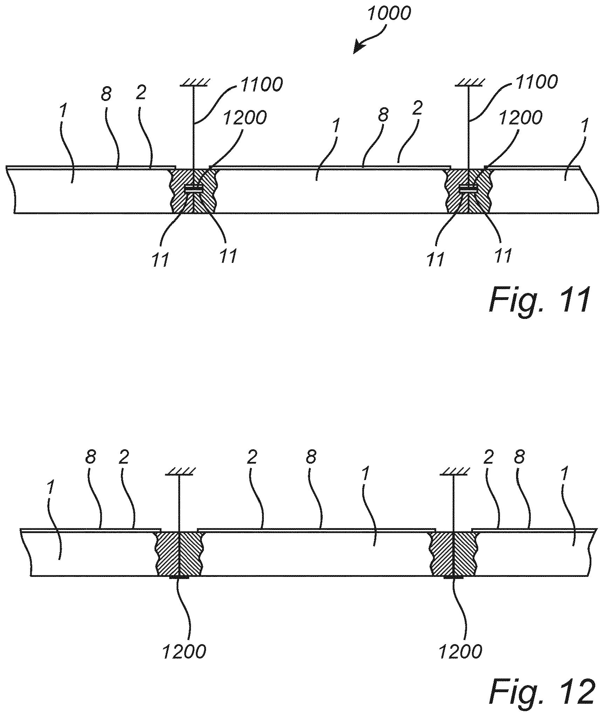

The second reinforcing structure 10 provides an overall reinforcement of the acoustic panel 1 which protects the edges 3 of the panel 1 during transport and handling. The thus reinforced at least one side edge 3 may be provided with a groove arrangement 11 configured to engage a grid of profiles in a condition when the acoustic panel 1 is suspended, see Figs. 11 and 12. The skilled person realizes that the groove arrangement 11 may be provided with different cross-sectional profiles depending on the type of profiles used.

The second reinforcing structure 10 and/or the first reinforcing structure 8 may be a reinforcing agent which is introduced into the acoustic panel 1 in liquid form by diffusing, pressing, blowing, sucking or injecting and then activated. The activation is made to cure the reinforcing agent. A panel 1 made of compressed mineral fibre material has an inherent porous structure, and that porosity may thus be utilized for introducing the reinforcement agent in liquid form into the panel 1. Alternatively, the reinforcement agent may be in pulverulent form and be introduced into the panel 1 by vibrating the reinforcement agent into the panel. The porosity of the panel 1 may be utilized for introducing the reinforcement agent into the panel.

The reinforcement agent may be selected from the group consisting of lignosulphonate, silicates, such as sodium silicates, polyesters, melamine, urea formaldehyde, polyamides, furane-based resins, and phenolic resin-based binders.

The reinforcing agent may be activated by drying, curing or heating. The choice of activation is applicable no matter if the reinforcing agent is applied in liquid or pulverulent form.

It is to be understood that the penetration depth of the reinforcing agent may differ depending on whether it is a first reinforcing structure 8 or a second reinforcing structure 10 to be formed. It is also to be understood that the penetration depth may differ along the longitudinal extension of an individual reinforcing structure 8, 10. Also, in the event the acoustic panel 1 comprises more than one reinforcing structure of the same type, e.g. two or more first reinforcing structures 8, these may have different penetration depths.

In the event both the first and the second reinforcing structures 8, 10 are formed by a reinforcing agent that is introduced into the acoustic panel 1 in liquid form it is to be understood that, the two reinforcing structures 8, 10 may be formed at different stations in the production chain.

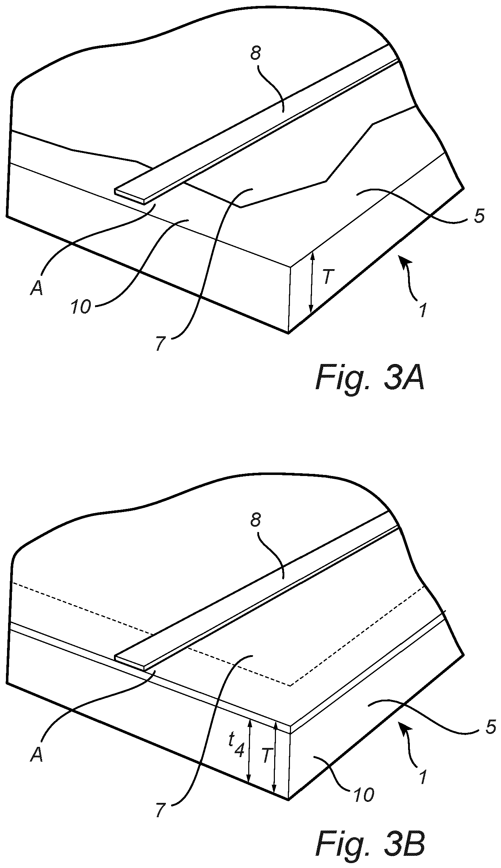

Now turning to Figs. 3A and 3B, the interaction between the first and second reinforcing structures 8, 10 will be disclosed as seen in the outer boundary portion 5. The first reinforcing structure 8 may at least partially overlap the second reinforcing structure 10 in the first and second positions A, B in the outer boundary portion 5.

Fig. 3A schematically discloses a cross-section of a side edge portion of an acoustic panel 1 with the outer boundary portion 5 and a portion of the inner boundary portion 7. In this embodiment, the outer boundary portion 5 comprises a second reinforcing structure 10 which extends through the full thickness T of the panel 1. Further, the panel 1 comprises a strip of a first reinforcing structure 8 that extends from a first position A in the outer boundary portion 5 in a direction towards the opposite edge portion (not disclosed) of the panel 1. The first reinforcing structure 8 is arranged on top of the exterior surface of the panel 1. In this embodiment, there is a physical overlap with the two types of reinforcing structures 8, 10 physically contacting each other.

Turning to Fig. 3B, a schematic a cross-section of a side edge portion of an acoustic panel 1 with the outer boundary portion 5 and a portion of the inner boundary portion 7 is disclosed. In this embodiment, the outer boundary portion 5 comprises a second reinforcing structure 10 which has a thickness t4 being smaller that the full thickness T of the panel 1. Further, the panel 1 comprises a strip of a first reinforcing structure 8 that extends from a first position A in the outer boundary portion 5 in a direction towards the opposite edge portion (not disclosed) of the panel 1. The first reinforcing structure 8 is arranged on top of the exterior surface of the panel 1. As an effect of the two types of reinforcing structures 8, 10 being arranged in different layers as seen in the thickness direction of the acoustic panel 1, there is a non-physical overlap with the two types of reinforcing structures 8, 10.

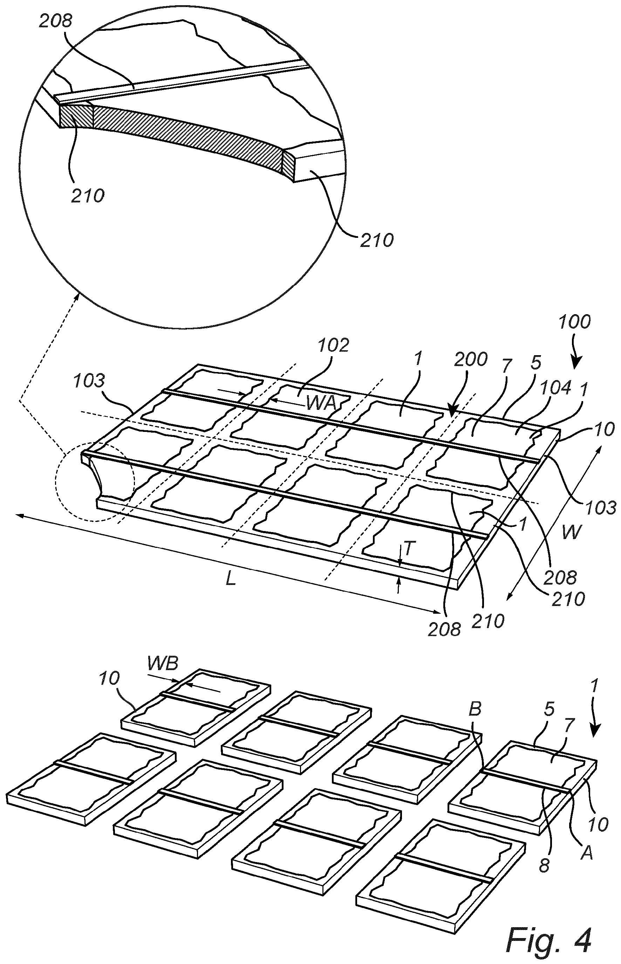

Now turning to Fig. 4, one embodiment of a baseboard 100 intended to be cut up into a plurality of acoustic panels 1 of the type described with reference to Fig. 1 is disclosed. The baseboard 100 comprises a body 104 made of compressed mineral fibre material and a reinforcing grid 200. The baseboard 100 has in the disclosed embodiment a rectangular shape having a width W, and a length L and a thickness T. The baseboard 100 is dimensioned to contain two acoustic panels 1 along the width W and four acoustic panels 1 along the length L. The intended cut-lines are schematically disclosed by dashed lines.

Each acoustic panel 1 to be cut comprises an outer boundary portion 5 delimiting an inner boundary portion 7. The outer boundary portion 5 of a first acoustic panel 1 to be cut from the baseboard 100 merges with the outer boundary portions 5 of three or more adjacent acoustic panels 1 to be cut from the baseboard 100. Each panel 1 to be cut comprises a single first reinforcing structure 8 which extends from a first position A in the outer boundary portion 5, across the inner boundary portion 7 to a second position B in the outer boundary portion 5. Each panel 1 to be cut further comprises a second reinforcing structure 10 which extends in the outer boundary portion 5.

The body 104 of the baseboard 100 comprises a compressed mineral fibre material having a low density, such as 10-80 kg/m³ in case of glass wool and 30-150 kg/m³ in case of stone wool.

The reinforcing grid 200 may be seen as comprising a first global reinforcing structure 208 and a second global reinforcing structure 210. When cutting the baseboard 200 into the individual acoustic panels 1, the first and second global reinforcing structures 208, 210 will be cut so that each panel 1 will receive its respective first and second reinforcing structure 8, 10 of the type that has been described above.

Starting with the first global reinforcing structure 208, this is in the disclosed embodiment formed as two parallel strip-shaped extensions extending along the length L of the baseboard 100 and between two opposite side edges 103 of the baseboard 100. The first global reinforcing structure 208 is in the disclosed embodiment formed as a rigid lath that is fixedly arranged on top of the upper major surface 102 of the baseboard 100.

The second global reinforcing structure 210 extends as a grid in the width direction and in the length direction of the baseboard 100. The second global reinforcing structure 210 virtually divides the body 104 in predetermined zones corresponding to side edge portions and hence the outer boundary portions 5 of the plurality of acoustical panels 1 to be cut from the baseboard 100. The lower left-hand corner of the baseboard 100 has been cut away to more clearly illustrate the global reinforcing structures 108, 110. In this embodiment there is a physical overlap between the first and second global reinforcing structures 208, 210.

The second global reinforcing structure 210 is disclosed as having a continuous extension along the predetermined zones. Also, the predetermined zones correspond to all side edge portions of each acoustical panel 1 to be cut. Thereby, each panel 1 obtained from the baseboard 100 will exhibit a continuous second reinforcing structure 10 which extends along all its side edge portions.

The strip-shaped second global reinforcing structure 210 has a width WA which corresponds to the double dimensioned width WB of the second reinforcing structure 10 of an individual acoustic panel 1 to be cut. Thereby, when cutting the baseboard 100 along a centreline extending along such second global reinforcing structure 210, each individual acoustic panel 1 thus cut will receive a second reinforcing structure 10 having its dimensioned width WB.

The second global reinforcing structure 210 is in the disclosed embodiment formed by an activated reinforcing agent.

The second global reinforcing structure 210 is disclosed in the embodiment disclosed in Fig. 4 as having a continuous extension in the width direction and in the length direction of the baseboard.

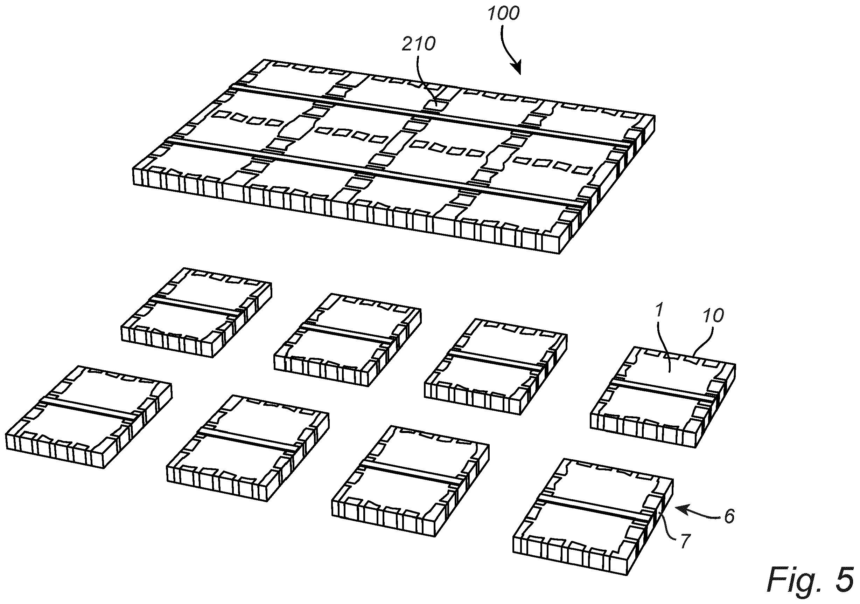

Now turning to Fig. 5, another embodiment is disclosed in which the second global reinforcing structure 210 of the baseboard 100 has a non-continuous extension in the width direction and in the length direction. Each acoustic panel 1 thus cut from the baseboard 100 will exhibit a non-continuous second reinforcing structure 10 extending along all side edge portions. The provision of a reinforcing panel 1 having a thus formed non-continuous second reinforcing structure 10 enables formation of groove arrangements in the side edge portions having improved mechanical strength while reducing the amount of reinforcement agent necessary for forming the second reinforcement structure 10.

The skilled person will understand that it is possible to provide a global reinforcing structure with some portions thereof having a continuous extension and some portions thereof having a non-continuous extension.

In the following it will be exemplified how the first and/or second global reinforcing structures 208, 210 of the reinforcing grid 200 may be formed by using a reinforcement agent to be activated. The reinforcement agent is introduced into the baseboard 100 along the intended extension of the reinforcing structures 208, 210 by utilizing the porous structure of the body 104 of the baseboard 100. It is to be understood that the very same principles to be described below are applicable if only forming an acoustic panel 1.

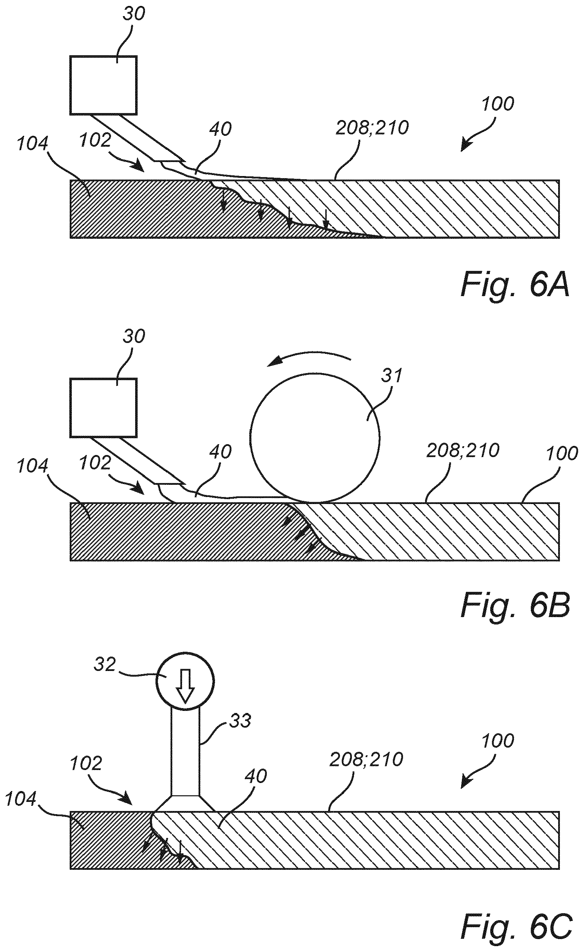

The reinforcement agent may for instance be diffused into the baseboard 100, as illustrated in Fig. 6A. In the shown embodiment, a dispenser 30 is moved relative the baseboard 100 along the intended pattern of the reinforcing structure 208, 210 while dispensing the reinforcement agent 40 in liquid form onto an upper major surface 102 of the baseboard 100. The dispensed liquid reinforcement agent 40 diffuses or soaks into the baseboard 100 due to the porosity of the body 104 thereof. Several layers may be formed, which may be seen as an example of 3D printing.

Alternatively, the reinforcement agent 40 may be pressed into the baseboard 100, as illustrated in Fig. 6B. In the shown embodiment, a dispenser 30 is moved relative the baseboard 100 along a predetermined pattern dispensing the reinforcement agent 40 in liquid form onto an upper major surface 102 of the baseboard 100. The dispenser 30 is followed by a roller 31 engaging the dispensed reinforcement agent 40 and thereby pressing it into the porous body 104 of the baseboard 100.

According to another alternative, the reinforcement agent may be blown into the baseboard 100, as illustrated in Fig. 6C. In the shown embodiment, a blowing arrangement 32 is moved relative the baseboard 100 along a predetermined pattern. The blowing arrangement 32 comprises means 33 for dispensing the reinforcement agent 40 in liquid form onto the upper major surface 102 of the baseboard 100 and is arranged to create a positive pressure blowing or urging the reinforcement agent 40 into the porous body 104 of the baseboard 100.

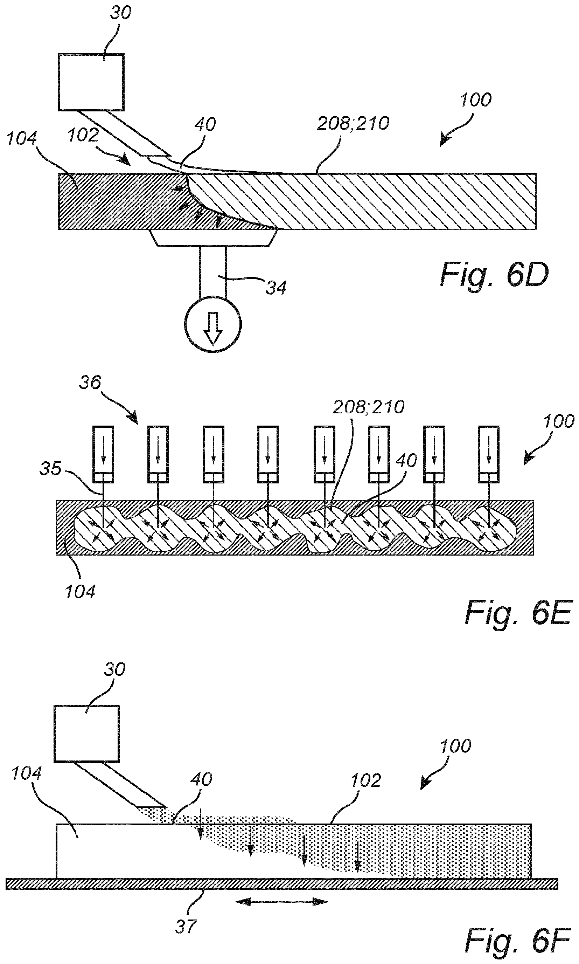

According to yet another alternative, the reinforcement agent 40 may be sucked into the baseboard 100, as illustrated in Fig. 6D. In the shown embodiment, a dispenser 30 is moved relative the baseboard 100 along a predetermined pattern while dispensing the reinforcement agent 40 in liquid form onto an upper major surface 102 of the baseboard 100. A suction arrangement 34 is provided at a lower major surface of the baseboard 100 and arranged to suck or draw the reinforcement agent 40 dispensed on the upper major surface 102 of the baseboard 100 into the porous body 104.

According to yet another alternative, the reinforcement agent 40 may be injected into the baseboard 100, as illustrated in Fig. 6E. In the shown embodiment, needles 35 of a set of injectors 36 are introduced into the baseboard 100 along a predetermined pattern, and subsequently, the reinforcement agent 40 is injected in liquid form into the body 104 of the baseboard 100, wherein the porous structure of the body 104 allows the reinforcement agent 40 to propagate in the body 104.

According to yet another alternative, the reinforcement agent 40 may be vibrated into the baseboard 100, as illustrated in Fig. 6F. In the shown embodiment, a dispenser 30 is moved relative the baseboard 100 along a predetermined pattern dispensing the reinforcement agent 40 in pulverulent form, such as lignosulphonate, onto an upper major surface 1022 of the baseboard 100. The reinforcement agent 40 is then introduced into the porous body 104 of the baseboard 100 by means of vibration of the baseboard 100, for instance by vibrating a support 37 upon which the baseboard 100 is resting.

The reinforcement agent 40 introduced into or applied to the baseboard 100 is subsequently activated in order to form the reinforcing structure 208, 210. The reinforcement agent 40 may be activated by drying, curing or heating. For instance, after introducing the reinforcement agent 40 into the porous body 104 of the baseboard 100, the baseboard 100 may be transferred to an oven (not disclosed) where the baseboard 100 is exposed to heat for activation of the reinforcement agent 40. Alternatively, the baseboard 100 may be transferred passed a non-disclosed source of UV light.

The reinforcement agent 40 may be selected from the group consisting of lignosulphonate, silicates, such as sodium silicates, polyesters, melamine, urea formaldehyde, polyamides, furane-based resins, and phenolic resin-based binders.

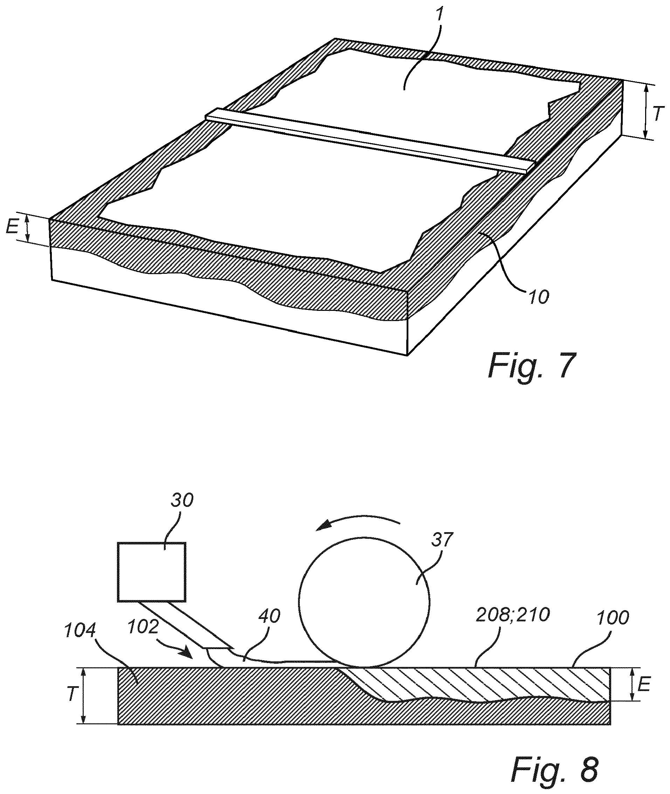

In the embodiments above, the second reinforcing structure 210 has been described as extending through the entire thickness T of the baseboard 100. It is understood that this is not necessary the case. An acoustic panel 1 obtained from a baseboard 100 in which the reinforcing structure 210 does not extend through the entire thickness T of the baseboard 100 will thus exhibit a reinforcing structure 10 with an extension E in a thickness direction of the panel 1 which is smaller than the thickness T of the panel 1, as illustrated in Fig. 7.

In Fig. 8, a process for obtaining a baseboard 100 with reinforcing structure 208, 210 having an extension E in a thickness direction of the baseboard 100 which is smaller than the thickness T of the baseboard 100 is illustrated. A dispenser 30 is moved relative the baseboard 100 along a predetermined pattern while dispensing the reinforcement agent 40 in liquid form onto an upper major surface 102 of the baseboard 100. The dispenser 30 is followed by a roller 37 engaging the dispensed reinforcement agent 40 and thereby pressing it into the baseboard 100. The quantity of the dispensed reinforcement agent 40 is so adjusted such that reinforcement agent pressed into the body 104 of the baseboard 100 does not propagate through the entire thickness T of the porous body 104.

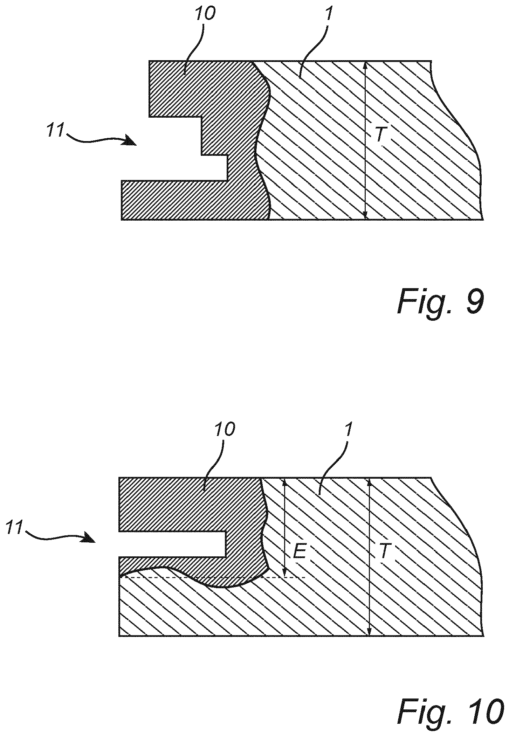

An acoustic panel 1 obtained from a baseboard 100 in accordance with the present invention will as mentioned above have a second reinforcing structure 10 extending along a side edge portion of the panel 1. The second reinforcing structure 10 will thus reinforce the associated side edge portion which may be provided with a groove arrangement 11 for instance by a milling operation. Fig. 9 illustrates such a side edge portion of an acoustic panel 1 having a second reinforcing structure 10 provided with a groove arrangement 11. In the shown embodiment, the second reinforcing structure 10 extends throughout the entire thickness T of the panel 1 and encompasses the groove arrangement 11 having a stepped configuration comprising two sub-grooves of different depths.

Fig. 10 illustrates an acoustic panel 1 having a second reinforcing structure 10 extending along a side edge portion with an extension E in the thickness direction of the panel 1 which is smaller than the thickness T of the panel 1. Such second reinforcing structure 10 may for instance be suitable for more simple groove arrangements. In the shown embodiment the groove arrangement 11 comprises only one groove encompassed in the second reinforcing structure 10.

Now turning to Fig. 11, a highly schematically illustrated suspended acoustic system 1000 is provided. The system 1000 comprises reinforced acoustic panels 1 of the invention which are supported by a grid of profiles 1100. The grid of profiles 1100 comprises supporting flanges 1200 which engage groove arrangements 11 formed in the side edge portions of the acoustic panel 1. The first reinforcing structures 8 are disclosed as being arranged on the top major surface 2 and will hence not be visual when standing below such suspended ceiling. The same principle is equally applicable for panels to be mounted on a wall.

The suspension may in another embodiment, see Fig. 12 be provided by the reinforced acoustic panels 1 resting on-top of supporting flanges 1200. The first reinforcing structures 8 are disclosed as being arranged on the top major surface 2 and will hence not be visual when standing below such suspended ceiling. It is to be understood that the first reinforcing structure 8 alternatively may be arranged on the lower major surface 2 and hence be provided as an ornament.

It will be appreciated that the present invention is not limited to the embodiments shown. Several modifications and variations are thus conceivable within the scope of the invention which thus is exclusively defined by the appended claims.

The acoustic panel 1 has been exemplified as having a quadrangular, i.e. a polygonal shape, as seen across its major surface. Thus, in the event of a polygonal shape, the shape may have three or more side edges, such as being triangular, quadrangular, pentagonal, hexagonal etc. It is to be understood that the invention is equally applicable to an acoustic panel 1 having a rounded shape as seen across its major surface, i.e. being circular or oval.

The first reinforcing structures have been exemplified as having a straight-linear extension. It is to be understood that non-straight extensions are equally possible within the scope of the invention.

It is to be understood that one and the same baseboard may be formed and be configured to be cut into a plurality of acoustic panels which have different designs of their reinforcing structures. Thus, the reinforcing grid of the baseboard must not be strictly symmetrical.

Different sub-portions of the reinforcing grid may be formed by different application methods. Further, it is to be understood that different sub-portions of the reinforcing grid may be formed with different thicknesses/penetration depths.

## Claims

1. Acoustic panel made of a compressed mineral fibre material comprising two major surfaces (2) and at least one side edge connecting the two major surfaces (2),
wherein the panel (1) has an outer boundary portion (5) associated with the at least one side edge and delimiting an inner boundary portion (7),
wherein the acoustic panel (1) comprises a first reinforcing structure (8) having a strip-shaped extension across the inner boundary portion (7) from a first position (A) in the outer boundary portion (5) to a second position (B) in the outer boundary portion (5).

2. The acoustic panel according to claim 1, wherein the first reinforcing structure (8) is applied on at least one of the two major surfaces (2).

3. The acoustic panel according to claim 1 or 2, wherein the acoustic panel (1) comprises a laminated structure and wherein the first reinforcing structure (8) is applied between two layers of the laminated structure.

4. The acoustic panel according to any of the preceding claims, wherein the first reinforcing structure (8) is a coating applied in liquid form as a strip having a continuous extension, or wherein the first reinforcing structure (8) is a structural rigid unit in the form of a lath or tape having a continuous extension.

5. The acoustic panel according to claim 4, wherein the coating after application is activated by using UV light or heat.

6. The acoustic panel according to any of the preceding claims, further comprising a second reinforcing structure (10) having a strip-shaped extension along the at least one side edge of the panel (1) and in the outer boundary portion (5).

7. The acoustic panel according to claim 6, wherein the second reinforcing structure (10) has a continuous extension.

8. The acoustic panel according to any of claims 6 or 7, wherein the second reinforcing structure (10) and/or the first reinforcing structure (8) is a reinforcing agent which is introduced into the panel (1) in liquid form by diffusing, pressing, blowing, sucking or injecting and then activated, or
wherein the reinforcement agent is in pulverulent form and is introduced into the panel (1) by vibrating the reinforcement agent into the panel (1).

9. The acoustic panel according to any of claims 6-8, wherein the reinforcement agent is introduced such that the second reinforcing structure (10) and/or first reinforcing structure (8) formed after activation of the reinforcement agent exhibits an extension E in a thickness direction of the acoustic panel (1) which is smaller than the thickness T of the acoustic panel (1).

10. The acoustic panel according to any of claims 6-9, where in the first reinforcing structure (8) at least partially overlaps the second reinforcing structure (10) in the first and second positions (A, B) in the outer boundary portion (5).

11. The acoustic panel according to any of the preceding claims, wherein the compressed mineral fibre material is a glass wool having a density ranging within 10-80 kg/m3, or wherein the compressed mineral fibre material is a stone wool having a density ranging within 30-150 kg/m3.

12. A baseboard intended to be cut up into a plurality of acoustical panels, the baseboard (100) comprising a body (104) made of compressed mineral fibre material and a reinforcing grid (200), wherein
the side edge portion of each acoustic panel (1) to be cut comprises an outer boundary portion (5) delimiting an inner boundary portion (7); and wherein
the reinforcing grid (200), for each acoustic panel (1) to be cut, comprises
a first reinforcing structure (208) having a strip-shaped extension across the inner boundary portion (7) from a first position (A) in the outer boundary portion (5) to a second position (B) in the outer boundary portion (5), and
a second reinforcing structure (210) having a strip-shaped extension along the side edge portion of the acoustic panel (1) to be cut and in the outer boundary portion (7).

13. Suspended acoustic system comprising an acoustic panel (1) according to any of claims 1-11.

14. The suspended ceiling system according to claim 12, further comprising a grid of profiles (1100) supporting the acoustic panel (1).

15. The suspended ceiling system according to claim 14, wherein the grid of profiles (1100) comprises supporting flanges (1200) configured to engage with the outer boundary portion 5 of the acoustic panel (1).
